# EUROPEAN PATENT SPECIFICATION

(11) **EP 2 764 432 B1**
(45) Date of publication and mention of the grant of the patent: **01.08.2018**
(21) Application number: 11873666.9
(22) Date of filing: 03.10.2011
(51) Int. Cl.: G06F 7/00, G06Q 30/02, H04L 12/26, H04L 29/08, G06Q 30/06, H04L 12/14, H04W 4/18, H04W 8/18, H04W 4/24

(54) **MOBILE CONTENT DELIVERY**
MOBILE INHALTSBEREITSTELLUNG
FOURNITURE MOBILE DE CONTENUS

(43) Date of publication of application: 13.08.2014
(73) Proprietor: Affirmed Networks, Inc., Acton, MA 01720 (US)
(72) Inventor: AHMED, Hassan, Andover, MA 01810 (US); KRISHNAMURTHY, Anand, Acton, MA 01720 (US); DURAND, Terry, Roswell, GA 30075 (US); MORTSOLF, Tim, Amherst, MA 01002 (US); SHERER, Paul, Danville, CA 94506 (US)
(74) Representative: HGF Limited
(86) International application number: PCT/US2011/054578
(87) International publication number: WO 2013/052028

(56) References cited:
- US-A1- 2008 194 233
- US-A1- 2008 195 664
- US-A1- 2008 195 664
- US-A1- 2009 190 505
- US-A1- 2009 285 225
- US-A1- 2011 203 006
- US-B2- 7 299 050

## Description

### BACKGROUND OF THE INVENTION

The invention generally relates to cellular networks, and more specifically to mobile content delivery.

A content delivery network or content distribution network (CDN) is a system of computers containing copies of data placed at various nodes of a network. When properly designed and implemented, a CDN can improve access to the data it caches by increasing access bandwidth and redundancy and reducing access latency. Data content types often cached in CDNs include web objects, downloadable objects (e.g., media files, software, documents), applications, live streaming media, database queries and so forth.

Traditional CDNs are Internet-based and lack mobile subscriber information. Existing CDNs deliver content based upon a billing and delivery relationship with the content source and do not use any mobile subscriber, or mobile network related billing or delivery information. This lack of information includes mobile network conditions, subscriber device attributes, subscriber billing attributes, and subscriber policy attributes, mobile location, roamed to mobile network and a host of other mobile specific attributes. Additionally, there is no information into a subscriber policy that may include subscriber experience-related information based on subscriber attributes, content attributes, device attributes and network attributes and conditions. These policies may be used to optimize the use of delivery resources while maintaining subscriber experience potentially allowing both reduced resource usage for a given subscriber load and a more consistent subscriber experience.

By traditional CDNs lacking this type of mobile subscriber information, the content source provider is disinter mediated from the mobile subscribers billing and content policies and subscriptions plans. Therefore the CDN provider is delivering a sub-optimized mobile subscriber and mobile billing experience for the content source provider when the content is targeted to mobile subscribers.

Document US 2008/195664 discloses a method and system for delivery of content on a mobile media platform, providing an automated tag processing facility, and delivering content to a mobile device, wherein content delivery is based at least in part on the automated tag processing.

### SUMMARY OF THE INVENTION

There is provided a method as set out in claim 1, and a mobile content delivery network server as set out in claim 8.

The following presents a simplified summary of the innovation in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention provides methods and apparatus, including computer program products, for mobile content delivery.

In an aspect, the invention features a method including, in a mobile network, maintaining a database of mobile subscriber information for mobile subscribers derived from the mobile network, receiving a request for content from a mobile subscriber, loading the requested content, processing the requested content in conjunction with mobile subscriber information in the database of mobile subscriber information, and delivering the processed requested content to the mobile subscriber.

In another aspect, the invention features a mobile content delivery network (CDN) server including a processor, a storage device, and a memory, the memory including an operating system and a mobile CDN process, the mobile CDN process including maintaining a database of mobile subscriber information for mobile subscribers derived from a mobile network, receiving a request for content from a mobile subscriber in the mobile network, loading the requested content, processing the requested content in conjunction with mobile subscriber information in the database of mobile subscriber information, and delivering the processed requested content to the mobile subscriber.

Other features and advantages of the invention are apparent from the following description, and from the claims.

### BRIEF DESCRIPTION OF THE DRAWINGS

The invention will be more fully understood by reference to the detailed description, in conjunction with the following figures, wherein:
FIG. 1 is a block diagram of an exemplary network.
FIG. 2 is a block diagram of an exemplary network.
FIG. 3 is a block diagram of a mobile content delivery network server.
FIG. 4 is a flow diagram.

### DETAILED DESCRIPTION

The subject innovation is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

As used in this application, the terms "component," "system," "platform," and the like can refer to a computer-related entity or an entity related to an operational machine with one or more specific functionalities. The entities disclosed herein can be either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal).

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

Moreover, terms like "user equipment," "mobile station," "mobile," "subscriber station," "communication device," "access terminal," "terminal," "handset," and similar terminology, refer to a wireless device (e.g., cellular phone, smart phone, computer, personal digital assistant (PDA), set-top box, Internet Protocol Television (IPTV), electronic gaming device, printer, etc.) utilized by a subscriber or user of a wireless communication service to receive or convey data, control, voice, video, sound, gaming, or substantially any data-stream or signaling-stream. The foregoing terms are utilized interchangeably in the subject specification and related drawings. Likewise, the terms "access point," "base station," "Node B," "evolved Node B," "home Node B (HNB)," and the like, are utilized interchangeably in the subject application, and refer to a wireless network component or appliance that serves and receives data, control, voice, video, sound, gaming, or substantially any data-stream or signaling-stream from a set of subscriber stations. Data and signaling streams can be packetized or frame-based flows.

Furthermore, the terms "user," "subscriber," "customer," and the like are employed interchangeably throughout the subject specification, unless context warrants particular distinction(s) among the terms.

In traditional Internet-based Content Delivery Networks (CDNs), mobile specific information is not utilized to improve the speed of delivery, quality, and type of content that can or cannot be delivered to a mobile subscriber. The present invention relates to mobile content delivery that radically improves a speed of delivery, a quality of delivery, a time of delivery, and a billing of the content. In addition, the present invention enables a mobile carrier to apply a differentiated billing model for delivery of the content. The present invention facilitates either a mobile subscriber being charged for the content, a content provider being charged, both parties being charged, or free delivery of the content based upon promotional or advertising agreements between a content originator and the mobile carrier.

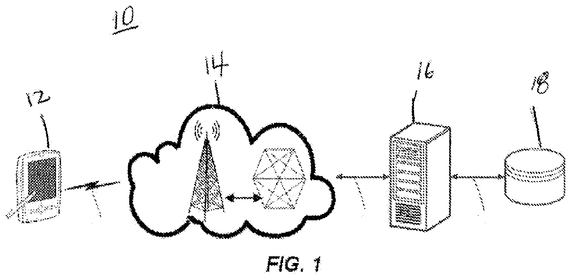

As shown in FIG. 1, an exemplary mobile network 10 includes a wireless mobile device 12, a mobile access network infrastructure 14 setup by a mobile service provider/operator, a mobile content delivery network (mobile CDN) server 16 deployed within the mobile operator network or remotely deployed network, and a content database 18. In operation, the wireless mobile device 12 is coupled to mobile access network infrastructure 14, which is coupled to mobile CDN server 16, which is coupled to content database 18.

Wireless mobile device 12 can support existing and future wireless technologies supporting wireless mobile communication, including, without limitation, cell phones (mobile phones), Personal Data Assistants (PDAs), personal computers (PCs) such as laptops, palmtops, and tablet PCs, and general purpose mobile computing devices. The wireless mobile device 12 supports wireless communication with mobile operator infrastructure 14 via a wireless link 20. Such wireless communication, characteristics of wireless link 20, and the manner in which wireless link 20 is implemented and maintained can be governed by one or more applicable wireless communication protocols and/or one or more applicable signaling and network protocols. In the example embodiment, wireless mobile device 12 is configured to support Wireless GSM/GPRS/3G/CDMA/W-CDMA connectivity in compliance with established European Telecommunications Standards Institute (ETSI) standards, International Telecommunication Union (ITU) standards and Third Generation Partnership Project (3GPP) standards, International Telecommunication Union (ITU) standards and the like. Of course, wireless mobile device 102 may be configured to support alternate or additional wireless data communication protocols, including variations of 3G such as 3.9G or 4G. Wireless mobile device 12 can also utilize other technologies, such as, for example, Bluetooth, IEEE 802.11a/b/g (WLANs), IEEE 802.16 (WiMAX), IEEE 802.20, and so forth.

Mobile access network infrastructure 14 is generally deployed and managed by mobile network operators, such as Verizon and AT&T, who provide mobile services to users based on a subscription model in which mobile users pay for voice, data and other supplementary services. The mobile CDN server 16 is an intermediary between the mobile access network infrastructure 14 and the content domain where content is stored in the content database 18. The content residing at content database 18 can be stored locally in the mobile CDN server 16, or in multiple mobile CDNs, and transmitted over the mobile network operator infrastructure 14 to the end mobile subscriber 12.

The mobile CDN server 16 enhances the delivery of Internet or mobile based content by coupling mobile subscriber information derived from the mobile network 14, the subscriber device 12, the subscribers mobile charging and subscription plans, to the originator of the content, and the type of content being delivered to the mobile subscriber. The content is enhanced by applying these mobile specific characteristics during delivery of the content. The mobile CDN server 16 improves the speed of delivery, the quality of delivery, the time of delivery, and the billing of the content. The mobile CDN server 16 enables the mobile carrier to apply a differentiated billing model for delivery of the content. The mobile CDN server 16 facilitates either the mobile subscriber being charged for the content, the content provider being charged, both parties being charged, or free delivery of the content based upon promotional or advertising agreements between the content originator and the mobile carrier.

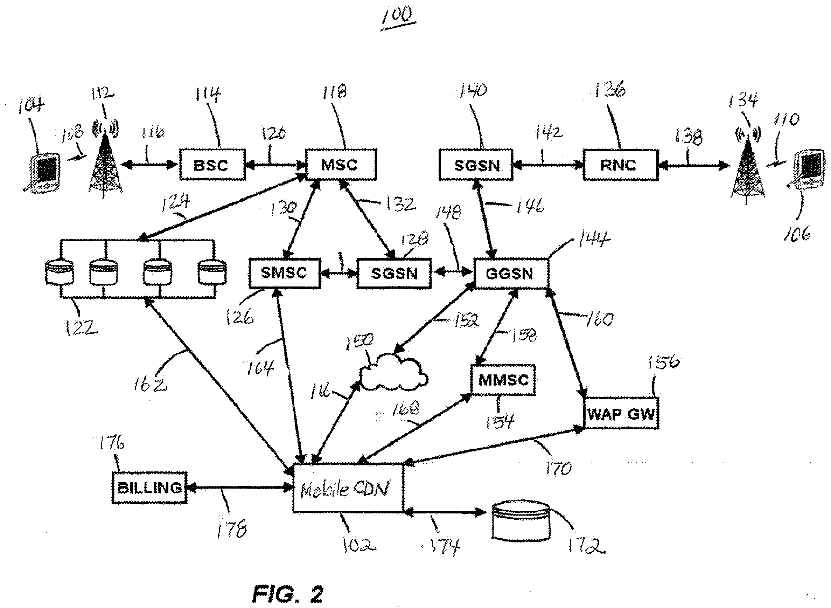

As shown in FIG. 2, an exemplary network 100 illustrates a mobile CDN server 102 interfacing with GSM/GPRS/CDMA/3G mobile access network. It should be noted that the network 100 may include additional components and functions that are unrelated to the mobile content delivery techniques described herein.

In the exemplary network 100, a mobile device (GSM/GPRS capable) 104 and a mobile device (3G capable) 106 subscribe to mobile operator services and communicate over a wireless link 108 and 110 respectively. The mobile device 104 can send or receive data or voice over the communication link 108 in the GSM/GPRS environment and the mobile device 106 over the communication link 110 in the 3G environment.

In the GSM/GPRS environment, to send or receive data with the mobile operator network, the mobile device 104 transmits/receives data and voice traffic to the Base Transceiver Station (BTS) 112. The BTS 112 is coupled with the Base Station Controller (BSC) 114 over a communication link 116. The BSC 114 is coupled with a Mobile Switching Center (MSC) 118 over a communication link 120. The MSC 118 is linked various Mobile operator databases 122, such as a Home Location Register (HLR), Visitor Location Register (VLR), Authentication Center (AUC), Equipment Identity Register (EIR), and forth, over a communication link 124 . The MSC 118 is also linked to a Short Message Service Center (SMSC) 126 and Serving GRPS Support Node (SGSN) 128 over communication links 130 and 132 respectively. SMSC 126 and SGSN 128 are coupled with a link 127.

Likewise in the 3G environment, the mobile device 106 sends and receives data and voice traffic to NODE-B 134 over the communication link 110. The NODE-B 134 is coupled with Radio Network Controller (RNC) 136 over a communication link 138. The RNC 136 is coupled with the 3G-Serving GPRS Support Node (3G-SGSN) 140 over a communication link 142. The 3G-SGSN 140 is coupled with Gateway GPRS Support Node (GGSN) 144 over a communication link 146. The GSM/GPRS network and the 3G network are coupled over a communication link 148. The GGSN 144 exposes the mobile world to the Internet 150 using a communication link 152. A Multimedia Messaging Service Center (MMSC) 154 and a Wireless Application Protocol Gateway (WAP-GW) 156 are coupled with the GGSN 144 over communication links 158 and 160, respectively. Although the schematics shown depict example arrangements of elements, additional intervening elements, devices, or components may be present in an actual embodiment (assuming that the functionality of the system is not adversely affected).

The mobile CDN server 102 is coupled with the Mobile Operator Databases 122 using a communication link 162. The manner in which the communication channel is established and maintained over communication link 162 may be governed by one or more applicable communication protocols and/or signaling protocols, such as the ETSI GSM MAP protocol specification, for example. The mobile CDN server 102 is coupled with the SMSC 126 to send and receive SMS messages over the mobile network infrastructure using a communication link 164. The manner in which communication is established and maintained over communication link 164 may be governed by one or more applicable communication protocols and/or one or more applicable network protocols, such as SMPP, CIMD2, and so forth. The mobile CDN server 102 is coupled with the Internet 150 using a communication link 166, which can include various standard data communication protocols such as TCP/IP, IEEE 802.3, and so forth. Using the link 166 the mobile CDN 102 can send or receive any content to the mobile world using the Internet 150. The mobile CN server 102 is coupled with the MMSC 154 using a communication link 168 to send and receive MMS messages. The manner in which communication is established and maintained over communication link 168 may be governed by one or more applicable communication protocols and/or one or more applicable network protocols such as the MM7 protocol. The mobile CDN 102 is coupled with the WAP-GW 156 using a communication link 170 to transfer WAP pages and related content. The manner in which communication is established and maintained over communication link 170 may be governed by one or more applicable communication protocols and/or one or more applicable network protocols.

The mobile CDN server 102 is coupled with a content database 172 using a communication link 174. The mobile CDN server 102 communicates with the content database 172 to retrieve and store, e.g., cache, content data to fulfill requests by a user. Using subscriber information obtained from the databases 122, content is formatted by the mobile CDN server 102 for presentation at the wireless mobile device 104 in the GSM/GRPS world or mobile device 106 in the 3G world.

In addition to content stored within the content database 172, there may be content managed by the mobile CDN server 102 that does not exist in the content database 172 and which is not tracked as individual content assets but as classes of content. In the case where content is not managed as individual assets, content is handled and tracked with respect to a policy associated with the class of content rather than the particular asset. Examples of this include subscriber real-time video communication, subscriber to subscriber video streaming, machine to machine communications, and so forth. In the case where content is not retrieved from the content database 172, the mobile CDN server 102 may or may not store (e.g., cache) the content, but act as a pass-through.

The mobile CDN server 102 is coupled with a mobile operator billing systems 176 using a communication link 178. The mobile CDN 102 can generate log files containing transaction details for specific transactions made by the mobile user while accessing certain content which need to be billed to the end mobile user. Such billing events are submitted through this interface to the mobile operator billing system 176 through the communication link 178.

The mobile CDN server 102 uses a combination of Mobile and Internet Deep Packet Inspection, Mobile Subscriber Database Queries, Mobile Subscriber Policy Queries, Mobile Network conditions, as well as Mobile Device characteristics to apply delivery and billing/charging decisions to either enhance, degrade, store, reformat, deliver, or some combination of each of these capabilities prior to delivering the content to the mobile subscriber, or between mobile subscribers. The mobile CDN server 102 obtains information on the mobile subscribers service subscriptions the mobile subscribers device characteristics, and the context of the content originator, such as billing relationship with the mobile carrier and the type of content being transmitted, to apply routing and delivery decisions on a per subscriber and per content originator basis. Additionally, mobile network characteristics, such as bandwidth available, network latency, and roamed to network, are used in the decision and routing analysis.

The mobile CDN server 102 mediates the delivery and billing of value-added content between the content source provider and the mobile subscriber. The coupling of information obtained from the content source to the subscribers content billing and delivery preferences enhances the overall mobile users quality of experience, and the billing/charging experience of content to mobile subscribers. Mobile carriers can leverage the mobile CDN server 102 to grow their revenue base by extending subscriptions to what has typically been Internet-based services, such as Netflix®, Apple®, Pandora® and other paid video and audio delivery platforms.

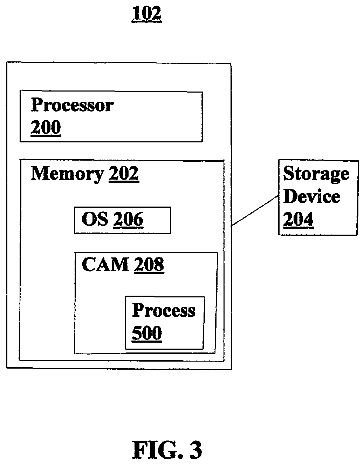

As shown in FIG. 3, the mobile CDN server 102 includes a processor 200, a memory 202 and a storage device 204. Memory 202 includes an operating system (OS) 206, such as Linux® or Windows®, and a content aware manager 208 that includes a mobile content delivery network (CDN) process 500. Memory 202 may also include a database management system to manage data stored in the storage device 204. Data includes content downloaded from one or more web servers residing in the Internet 150 and data downloaded from the databases 122 that represent information about individual subscribers. More particularly, data represents information on the mobile subscribers' service subscriptions, the mobile subscribers' device characteristics, and the context of the content originator, such as billing relationship with the mobile carrier and the type of content being transmitted to apply routing and delivery decisions on a per subscriber and per content originator basis. Additionally, data may include mobile network characteristics such as bandwidth available, network latency, and roamed to network that is used in the decision and routing analysis.

The content aware manager 208 intercepts mobile subscriber requests for services and the mobile CDN process 500 uses a combination of Mobile and Internet Deep Packet Inspection, Mobile Subscriber Database Queries, Mobile Subscriber Policy Queries, Mobile Network conditions, as well as Mobile Device characteristics to apply delivery and billing/charging decisions to either enhance, degrade, store, reformat, deliver, or a combination of each of these capabilities prior to delivering the content to the mobile subscriber, or between mobile subscribers. Services can include, for example, requests for content from carrier based applications, content from web servers (some or all of which is cached in the mobile CDN server 102), VoIP calls, video, and so forth.

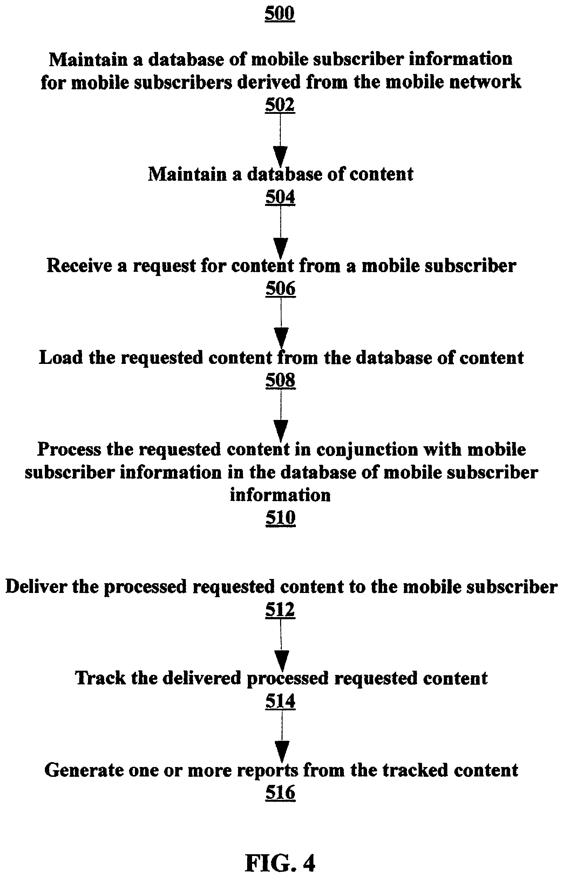

As shown in FIG. 4, the mobile CDN process 500 includes maintaining (502) a database of mobile subscriber information for mobile subscribers derived from the mobile network. Process 500 may maintain (504) a database of content. The mobile network may be a Global System for Mobile (GSM) network, General Packet Radio Service (GPRS) network, EDGE network, High Speed Downlink Packet Access (HSDPA) network, Code Division Multiple Access (CDMA) network, Long Term Evolution (LTE) network or an Advanced LTE network. The mobile subscriber information can include owner information, subscriber device information and subscriber mobile charging and/or subscription plan information.

Process 500 receives (506) a request for content from a mobile subscriber.

Process 500 loads (508) the requested content and processes (510) the requested content in conjunction with mobile subscriber information in the database of mobile subscriber information. Processing (510) the requested content can include reformatting the requested content using mobile and Internet Deep Packet Inspection, Mobile Subscriber Database Queries, Mobile Subscriber Policy Queries, mobile device characteristics and mobile network conditions.

Process 500 delivers (512) the processed requested content to the mobile subscriber.

Process 500 tracks (514) the delivered processed requested content and generates (516) one or more reports from the tracked content. An example report is a billing report.

In an another embodiment of the invention, additional functions are integrated within the mobile CDN server 102. These functions enable the mobile CDN server 102 to have visibility into all subscriber data traffic to and from a radio area network (RAN). Further, traffic may be mapped back to cells within the network. This enables the mobile CDN server 102 total control over load into the RAN and influence over load out of the RAN. This enables near real time experience-related traffic manipulation and near real time decisions concerning content format control in response to network conditions. Further, the mobile CDN 102 can provide time-shifted based delivery of content based upon subscriber policy or network conditions (e.g., off-peek delivery).

In addition, the mobile CDN server 102, having a knowledge of mobile network conditions, geography, and subscriber policies, can provide content-based revenue services as part of a service package, such as advertisement insertion.

With the knowledge of delivery policy, subscriber attributes, content attributes, device attributes, RAN attributes and other considerations, when content is requested and while it is being delivered, the mobile CDN server 102 can make decisions concerning the experience that is delivered. Experience factors include video resolution, audio resolution, multichannel audio (e.g., 7.1 surround), additional video views, frame rate and so forth. The mobile CDN 102 server can determine a range of acceptable experience that can be encoded in an experience descriptor. The mobile CDN server 102 then may use the experience descriptor to request not only the desired content but also the desired experience. This means both content and experience may be requested so that not only is the delivery of content amortized across the collection of systems but also the delivery of experience.

In addition to reformatting content based on network conditions, traffic that cannot be reformatted can be throttled by using Transmission Control Protocol (TCP) Acknowledgement (ACK) deferral and TCP window manipulation in order to better conform to a subscriber experience policy. Further, packet multiplex into the RAN can be fully determined to best implement a subscriber experience policy and optimize RAN usage.

Additionally, current bandwidth can be estimated per communication session and per cell. By using knowledge of RAN access mechanisms, models may be developed to predict bandwidth availability to assist in experience decisions and RAN optimization. An interface with the RAN can provide additional knowledge of bandwidth availability for use in experience decisions for RAN optimization.

Further, many Internet applications issue a Push Proxy Message to direct a mobile to a their web site to pull down the data. The mobile CDN server 102 can intercept those messages using Deep Packet Inspection (DPI) and redirect the phone to pull the message from its cache. This prevents the download of large volumes of data repeatedly from the origin server. In addition, for non-real time applications, the mobile CDN server 102 can time-shift the redirection so that the download occurs during off-peak hours, thus optimizing the usage of radio resources and reducing overload during busy hours.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback), and input from the user can be received in any form, including acoustic, speech, or tactile input.

The systems and techniques described here can be implemented in a computing system that includes a back-end component (e.g., a data server), or that includes a middleware component (e.g., an application server) or that includes a front-end component (e.g., a client computer having a graphical user interface or a web browser through which a user can interact with an implementation of the systems and techniques described here), or any combination of such back-end, middleware, or front-end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

The foregoing description does not represent an exhaustive list of all possible implementations consistent with this disclosure or of all possible variations of the implementations described. A number of implementations have been described. Nevertheless, it will be understood that various modifications may be made without departing from the scope of the systems, devices, methods and techniques described here. For example, various forms of the flows shown above may be used, with steps re-ordered, added, or removed. Accordingly, other implementations are within the scope of the following claims.

## Claims

1. A method comprising:
maintaining a local database of mobile subscriber information for mobile subscribers derived from mobile subscriber information residing in a database maintained in a mobile access network infrastructure (14) setup by a mobile service provider in a mobile access network (10), the mobile subscriber information comprising owner information, subscriber device information and subscriber mobile charging and subscription plan information, wherein the local database resides in a server within the mobile access network (10) comprising the mobile access network infrastructure (14) setup by the mobile service provider;
receiving in the server a request for content from a mobile subscriber of the mobile access infrastructure (14);
loading in the server the requested content from a content database (18; 172) of the mobile access network (10); processing in the server the requested content based on:
at least a portion of the mobile subscriber information in the local database of mobile subscriber information; and mobile network characteristics comprising at least one of bandwidth available, network latency, and roamed-to network; and
delivering the processed requested content in the server to the mobile subscriber of the mobile access infrastructure (14).

2. The method of claim 1 wherein delivering is time shifted based upon subscriber policy or mobile network conditions.

3. The method of claim 1 wherein the mobile access infrastructure (14) of the mobile access network (10) is selected from the group consisting of Global System for Mobile 'GSM', General Packet Radio Service 'GPRS', EDGE, High Speed Downlink Packet Access 'HSDPA', Code Division Multiple Access 'CDMA', Long Term Evolution 'LTE' and LTE Advanced.

4. The method of claim 1 wherein processing the requested content from the content database (18; 172) of the mobile access network (10) comprises reformatting the requested content using mobile and Internet Deep Packet Inspection, Mobile Subscriber Database Queries, Mobile Subscriber Policy Queries, content characteristic queries, content characteristics, mobile device characteristics and mobile network conditions.

5. The method of claim 1 wherein processing the requested content from the content database of the mobile access network (10) comprises adding revenue generating services to the content, the revenue generating services comprising advertisements.

6. The method of claim 1 further comprising tracking the delivered processed requested content from the content database of the mobile access network (10), and generating one or more reports from the tracked content, the one or more reports comprising a billing report.

7. The method of claim 1 wherein the content is stored in a local content database in the server.

8. A mobile content delivery network 'CDN' server (102) residing in a mobile access network (10), the CDN server (102) comprising:
at least one processor (200);
a storage device (204); and
a non-transitory computer readable media, the media comprising an operating system (206), a cache instructions that when executed cause:
at least one of the processors (200) to maintain a local database of mobile subscriber information for mobile subscribers derived from mobile subscriber information residing in a database maintained in a mobile access network infrastructure (14) setup by a mobile service provider in a mobile access network (10), the mobile subscriber information comprising owner information, subscriber device information and subscriber mobile charging and subscription plan information, wherein the CDN server (102) is within the mobile access network (10) comprising the mobile access network infrastructure (14) setup by the mobile service provider;
at least one of the processors (200) to receive a request for content residing in a content database (18; 172) of the mobile access network (10) from a mobile subscriber in the mobile access network infrastructure (14);
at least one of the processors (200) to load the requested content from the content database (18; 172);
at least one of the processors (200) to process the requested content from the content database (18; 172) based on at least a portion of the mobile subscriber information in the local database of mobile subscriber information, and mobile network characteristics comprising at least one of bandwidth available, network latency, and roamed-to network; and
at least one of the processors (200) to deliver the processed requested content from the content database (18; 172) of the mobile access network (10) to the mobile subscriber of the mobile access infrastructure (14).

9. The mobile CDN server (102) of claim 8 wherein the mobile access infrastructure is selected from the group consisting of Global System for Mobile 'GSM', General Packet Radio Service 'GPRS', EDGE, High Speed Downlink Packet Access 'HSDPA', Code Division Multiple Access 'CDMA', Long Term Evolution 'LTE' and LTE Advanced.

10. The mobile CDN server (102) of claim 8 wherein processing the requested content residing in the content database (18; 172) of the network comprises reformatting the requested content using mobile and Internet Deep Packet Inspection, Mobile Subscriber Database Queries, Mobile Subscriber Policy Queries, mobile device characteristics and mobile network conditions.

11. The mobile CDN server (102) of claim 8 wherein the non-transitory computer readable media further comprises instructions that when executed cause at least one of the processors to track the delivered processed requested content and to generate one or more reports from the tracked content, the one or more reports comprising a billing report.

12. The mobile CDN server (102) of claim 8 wherein memory further comprises functions enabling visibility into all subscriber data traffic to and from a radio area network 'RAN', wherein traffic may be mapped back to cells within the network.

13. The mobile CDN server (102) of claim 8 wherein processing the requested content further comprises determining an acceptable range of experience and encoding the acceptable range in an experience descriptor that is used along with the content requested to locate the content that is delivered.

14. The mobile CDN server (102) of claim 8 wherein loading comprises intercepting a Push Proxy Message using Deep Packet Inspection 'DPI' and redirecting a phone of the mobile subscriber to pull the message from the cache.

15. The mobile CDN server (102) of claim 14 wherein redirecting is time-shifted so that a download occurs during off-peak hours.

## Patentansprüche

1. Verfahren, aufweisend:
Verwalten einer lokalen Datenbank von Mobilfunkteilnehmer-Informationen für Mobilfunkteilnehmer, die von Mobilfunkteilnehmer-Informationen abgeleitet sind, die in einer Datenbank resident sind, die in einer mobilen Zugangsnetzinfrastruktur (14) verwaltet werden, die von einen Mobilfunkprovider in einem mobilen Zugangsnetz (10) eingerichtet wurde, wobei die Mobilfunkteilnehmer-Informationen Besitzerdaten, Informationen über das Teilnehmergerät und Informationen zur Gebührenerfassung für den Teilnehmer und zum Abonnementplan aufweisen,
wobei die lokale Datenbank in einem Server in dem mobilen Zugangsnetz (10) resident ist, das die mobile Zugangsnetzinfrastruktur (14) aufweist, die von dem Mobilfunkprovider eingerichtet wurde;
Empfangen einer Anforderung von Inhalt von einem Mobilfunkteilnehmer der mobilen Zugangsinfrastruktur (14) in dem Server;
Laden des angeforderten Inhalts aus einer Content-Datenbank (18; 172) des mobilen Zugangsnetzes (10) in den Server;
Verarbeiten des angeforderten Inhalts in dem Server auf Grundlage von:
mindestens einem Teil der Mobilfunkteilnehmer-Informationen in der lokalen Datenbank für Mobilfunkteilnehmer-Informationen; und
Mobilfunknetz-Eigenschaften, die mindestens eines von verfügbarer Bandbreite, Netzwerklatenz und Netzwerk des Rufbereichswechsels aufweisen; und
Ausliefern des in dem Server verarbeiteten angeforderten Inhalts an den Mobilfunkteilnehmer der mobilen Zugangsinfrastruktur (14).

2. Verfahren nach Anspruch 1, wobei das Ausliefern auf Grundlage einer Teilnehmerrichtlinie oder von Mobilfunknetzbedingungen zeitverschoben erfolgt.

3. Verfahren nach Anspruch 1, wobei die mobile Zugangsinfrastruktur (14) des mobilen Zugangsnetzes (10) aus der Gruppe ausgewählt wird, die aus globalem Mobilkommunikationssystem (Global System for Mobile) "GSM", General Packet Radio Service "GPRS", EDGE, High Speed Downlink Packet Access "HSDPA", Codemultiplexverfahren (Code Division Multiple Access) "CDMA", Long Term Evolution "LTE" und LTE-Advanced besteht.

4. Verfahren nach Anspruch 1, wobei das Verarbeiten des angeforderten Inhalts von der Content-Datenbank (18; 172) des mobilen Zugangsnetzes (10) ein Neuformatieren des angeforderten Inhalts aufweist unter Verwendung von mobiler und Internet-Deep-Packet-Inspection, Mobilfunkteilnehmer-Datenbankabfragen, Mobilfunkteilnehmer-Richtlinienabfragen, Abfragen von Inhaltseigenschaften, Inhaltseigenschaften, Mobilgeräteigenschaften und Mobilfunknetzbedingungen.

5. Verfahren nach Anspruch 1, wobei das Verarbeiten des angeforderten Inhalts von der Content-Datenbank des mobilen Zugangsnetzes (10) ein Hinzufügen von Umsatz generierenden Diensten für den Inhalt aufweist, wobei die Umsatz generierenden Dienste Werbeanzeigen aufweisen.

6. Verfahren nach Anspruch 1, ferner aufweisend ein Verfolgen des ausgelieferten verarbeiteten angeforderten Inhalts aus der Content-Datenbank des mobilen Zugangsnetzes (10) und Generieren von einem oder mehreren Berichten aus dem verfolgten Inhalt, wobei der eine oder die mehreren Berichte einen Abrechnungsbericht aufweisen.

7. Verfahren nach Anspruch 1, wobei der Inhalt in einer lokalen Content-Datenbank in dem Server gespeichert ist.

8. Mobiler Content-Auslieferungsnetz- ("CDN" - Content Delivery Network) Server (102), resident in einem mobilen Zugangsnetz (10), wobei der CDN-Server (102) aufweist:
mindestens einen Prozessor (200);
eine Speichereinheit (204); und
nichtflüchtige computerlesbare Medien, wobei die Medien ein Betriebssystem (206),
Cache-Anweisungen aufweisen, die beim Ausführen veranlassen:
dass mindestens einer der Prozessoren (200) eine lokale Datenbank von Mobilfunkteilnehmer-Informationen für Mobilfunkteilnehmer verwaltet, die von Mobilfunkteilnehmer-Informationen abgeleitet sind, die in einer Datenbank resident sind, die in einer mobilen Zugangsnetzinfrastruktur (14) verwaltet werden, die von einen Mobilfunkprovider in einem mobilen Zugangsnetz (10) eingerichtet wurde, wobei die Mobilfunkteilnehmer-Informationen Besitzerdaten, Informationen über das Teilnehmergerät und Informationen zur Gebührenerfassung für den Teilnehmer und zum Abonnementplan aufweisen, wobei sich der CDN-Server (102) in dem mobilen Zugangsnetz (10) befindet, das die mobile Zugangsnetzinfrastruktur (14) aufweist, die von dem Mobilfunkprovider eingerichtet wurde;
dass mindestens einer der Prozessoren (200) eine Anforderung für Inhalt, der in einer Content-Datenbank (18; 172) des mobilen Zugangsnetzes (10) resident ist, von einem Mobilfunkteilnehmer in der mobilen Zugangsnetzinfrastruktur (14) empfängt;
dass mindestens einer der Prozessor (200) den angeforderten Inhalt aus der Content-Datenbank (18; 172) lädt;
dass mindestens einer der Prozessoren (200) den von der Content-Datenbank (18; 172) angeforderten Inhalt auf Grundlage von mindestens einem Teil der Mobilfunkteilnehmer-Informationen in der lokalen Datenbank für Mobilfunkteilnehmer-Informationen und der Mobilfunknetz-Eigenschaften verarbeitet, die mindestens eines von verfügbarer Bandbreite, Netzwerklatenz und Netzwerk des Rufbereichswechsels aufweisen; und
dass mindestens einer der Prozessoren (200) den verarbeiteten angeforderten Inhalt von der Content-Datenbank (18; 172) des mobilen Zugangsnetzes (10) an den Mobilfunkteilnehmer der mobilen Zugangsnetzinfrastruktur (14) ausliefert.

9. Mobiler CDN-Server (102) nach Anspruch 8, wobei die mobile Zugangsinfrastruktur aus der Gruppe ausgewählt wird, die aus globalem Mobilkommunikationssystem (Global System for Mobile) "GSM", General Packet Radio Service "GPRS", EDGE, High Speed Downlink Packet Access "HSDPA", Codemultiplexverfahren (Code Division Multiple Access) "CDMA", Long Term Evolution "LTE" und LTE-Advanced besteht.

10. Mobiler CDN-Server (102) nach Anspruch 8, wobei das Verarbeiten des angeforderten Inhalts, der in der Content-Datenbank (18; 172) des Netzes resident ist, ein Neuformatieren des angeforderten Inhalts aufweist unter Verwendung von mobiler und Internet-Deep-Packet-Inspection, Mobilfunkteilnehmer-Datenbankabfragen, Mobilfunkteilnehmer-Richtlinienabfragen, Mobilgeräteigenschaften und Mobilfunknetzbedingungen.

11. Mobiler CDN-Server (102) nach Anspruch 8, wobei die nichtflüchtigen computerlesbaren Medien ferner Anweisungen aufweisen, die bei Ausführung mindestens einen der Prozessoren veranlassen, den ausgelieferten verarbeiteten angeforderten Inhalt zu verfolgen und einen oder mehrere Berichte aus dem verfolgten Inhalt zu generieren, wobei der eine oder die mehreren Berichte einen Abrechnungsbericht aufweisen.

12. Mobiler CDN-Server (102) nach Anspruch 8, wobei der Arbeitsspeicher ferner Funktionen aufweist, die eine Einsicht in sämtlichen Teilnehmer-Datenverkehr zu und von einem Funkzugangsnetz "RAN" ermöglichen, wobei der Verkehr wieder Zellen in dem Netz zugeordnet werden kann.

13. Mobiler CDN-Server (102) nach Anspruch 8, wobei die Verarbeitung des angeforderten Inhalts ferner ein Bestimmen eines akzeptablen Erfahrungsbereichs und ein Verschlüsseln des akzeptablen Bereichs in einem Erfahrungsdeskriptor aufweist, der zusammen mit dem angeforderten Inhalt verwendet wird, um den ausgelieferten Inhalt zu lokalisieren.

14. Mobiler CDN-Server (102) nach Anspruch 8, wobei ein Laden ein Abfangen einer Push-Proxy-Nachricht unter Verwendung der Deep Packet Inspection "DPT" und ein Umleiten eines Telefonanrufs von einem Mobilfunkteilnehmer aufweist, um die Nachricht aus dem Cache abzuziehen.

15. Mobiler CDN-Server (102) nach Anspruch 14, wobei das Umleiten zeitverschoben geschieht, sodass ein Herunterladen außerhalb der Hauptlastzeiten erfolgt.

## Revendications

1. Procédé comprenant :
la tenue d'une base de données locale d'informations sur abonnés mobiles pour abonnés mobiles,
dérivée d'informations sur abonnés mobiles résidant dans une base de données tenue dans une infrastructure de réseau d'accès mobile (14) établie par un fournisseur de service mobile dans un réseau d'accès mobile (10), les informations sur abonnés mobiles comprenant des informations sur le propriétaire, des informations sur le dispositif d'abonné et des informations sur le plan de facturation et d'abonnement mobile d'abonné, dans lequel la base de données locale réside dans un serveur à l'intérieur du réseau d'accès mobile (10) comprenant l'infrastructure de réseau d'accès mobile (14) établie par le fournisseur de service mobile ;
la réception dans le serveur d'une demande de contenu d'un abonné mobile de l'infrastructure d'accès mobile (14) ;
le chargement dans le serveur du contenu demandé à partir d'une base de données de contenu (18; 172) du réseau d'accès mobile (10) ;
le traitement dans le serveur du contenu demandé en fonction :
d'au moins une partie des informations d'abonné mobile dans la base de données locale d'informations sur les abonnés mobiles ; et
des caractéristiques du réseau mobile comprenant au moins l'un de : largeur de bande disponible, latence du réseau et réseau d'itinérance ; et
la fourniture du contenu demandé traité dans le serveur à l'abonné mobile de l'infrastructure d'accès mobile (14).

2. Procédé selon la revendication 1, dans lequel la fourniture est décalée dans le temps en fonction de la politique de l'abonné ou des conditions du réseau mobile.

3. Procédé selon la revendication 1, dans lequel l'infrastructure d'accès mobile (14) du réseau d'accès mobile (10) est sélectionnée dans le groupe constitué de : Global system for Mobile « GSM », General Packet Radio Service « GPRS », EDGE, High Speed Downlink Packet Access « HSDPA », Code Division Multiple Access « CDMA », Long Term Evolution « LTE » et LTE Advanced.

4. Procédé selon la revendication 1, dans lequel le traitement du contenu demandé à partir de la base de données de contenu (18; 172) du réseau d'accès mobile (10) comprend le reformatage du contenu demandé au moyen de : Inspection approfondie des paquets mobiles et Internet, Demandes de renseignements sur base de donnée d'abonnés mobiles, Demandes de renseignements sur politique d'abonnés mobiles, demandes de renseignements sur caractéristiques du contenu, caractéristiques du contenu, caractéristiques des dispositifs mobiles et conditions du réseau mobile.

5. Procédé selon la revendication 1, dans lequel le traitement du contenu demandé de la base de données de contenu du réseau d'accès mobile (10) comprend l'ajout de services de génération de revenus au contenu, les services de génération de revenus comprenant des annonces publicitaires.

6. Procédé selon la revendication 1, comprenant en outre le suivi du contenu demandé traité fourni provenant de la base de donnée de contenu du réseau d'accès mobile (10), et la génération d'un ou plusieurs rapports à partir du contenu suivi, le ou les rapports comprenant un rapport de facturation.

7. Procédé selon la revendication 1, dans lequel le contenu est stocké dans une base de données de contenu locale dans le serveur.

8. Serveur « CDN » de réseau de fourniture de contenu mobile (102) résidant dans un réseau d'accès mobile (10), le serveur CDN (102) comprenant :
au moins un processeur (200) ;
un dispositif de stockage (204) ; et
un média lisible par ordinateur non transitoire, le média comprenant un système d'exploitation (206), des instructions de mémoire cache qui, quand elles sont exécutées, font :
tenir par au moins l'un des processeurs (200) une base de données locale d'informations sur les abonnés mobiles pour les abonnés mobiles, dérivée des informations sur les abonnés mobiles résidant dans une base de données tenue dans une infrastructure de réseau d'accès mobile (14) établie par un fournisseur de service mobile dans un réseau d'accès mobile (10), les informations sur les abonnés mobiles comprenant les informations sur le propriétaire, les informations sur le dispositif de l'abonné et les informations sur le plan de facturation et d'abonnement mobiles de l'abonné, le serveur CDN (102) étant dans un réseau d'accès mobile (10) comprenant l'infrastructure de réseau d'accès mobile (14) établie par le fournisseur de service mobile ;
recevoir par au moins l'un des processeurs (200) une demande de contenu résidant dans une base de données de contenu (18; 172) du réseau d'accès mobile (10) d'un abonné mobile dans l'infrastructure de réseau d'accès mobile (14) ;
charger par au moins l'un des processeurs (200) le contenu demandé depuis la base de données de contenu (18; 172) ;
traiter par au moins l'un des processeurs (200) le contenu demandé provenant de la base de données de contenu (18; 172) en fonction d'au moins une partie des informations sur l'abonné mobile dans la base de données locale des informations sur l'abonné mobile, et les caractéristiques du réseau mobile comprenant au moins l'une de : largeur de bande disponible, latence du réseau et réseau d'itinérance ; et
fournir par au moins l'un des processeurs (200) le contenu demandé traité de la base de données de contenu (18; 172) du réseau d'accès mobile (10) à l'abonné mobile de l'infrastructure d'accès mobile (14).

9. Serveur CDN mobile (102) selon la revendication 8, dans lequel l'infrastructure d'accès mobile est sélectionnée dans le groupe constitué de Global System for Mobile « GSM », General Packet Radio Service « GPRS », EDGE, High Speed Downlink Packet Access « HSDPA », Code Division Multiple Access « CDMA », Long Term Evolution « LTE » et LTE Advanced.

10. Serveur CDN mobile (102) selon la revendication 8 dans lequel le traitement du contenu demandé résidant dans la base de données de contenu (18; 172) du réseau comprend le reformatage du contenu demandé au moyen de : Inspection approfondie de paquets Internet, Demandes de renseignements sur base de données d'abonnés mobiles, Demandes de renseignements sur politique d'abonnés mobiles, caractéristiques de dispositif mobile et conditions du réseau mobile.

11. Serveur CDN mobile (102) selon la revendication 8, dans lequel le média lisible par ordinateur non transitoire comprend en outre des instructions qui, lorsqu'elles sont exécutées, font suivre par au moins l'un des processeurs le contenu demandé traité fourni et générer un ou plusieurs rapports provenant du contenu suivi, le ou les rapports comprenant un rapport de facturation.

12. Serveur CDN mobile (102) selon la revendication 8, dans lequel la mémoire comprend en outre des fonctions permettant la visibilité dans tout le trafic de données d'abonnés vers et provenant d'un réseau local radio « RAN », le trafic pouvant être mappé de retour aux cellules à l'intérieur du réseau.

13. Serveur CDN mobile (102) selon la revendication 8 dans lequel le traitement du contenu demandé comprend en outre la détermination d'une plage acceptable d'expérience et le codage de la plage acceptable dans un descripteur d'expérience qui est utilisé conjointement avec le contenu demandé pour localiser le contenu qui est fourni.

14. Serveur CDN mobile (102) selon la revendication 8, dans lequel le chargement comprend l'interception d'un message Push Proxy par Inspection approfondie des paquets 'DPI' et la redirection d'un téléphone d'abonné mobile pour extraire le message de la mémoire cache.

15. Serveur CDN mobile (102) selon la revendication 14, dans lequel la redirection est décalée dans le temps de sorte qu'un téléchargement s'effectue en-dehors des heures de pointe.
